(19) Europäisches Patentamt
European Patent Office
Office européen des brevets

(11) **EP 4 429 072 A1**

(12) **EUROPEAN PATENT APPLICATION**

(43) Date of publication:
**11.09.2024 Bulletin 2024/37**

(21) Application number: **23161046.0**

(22) Date of filing: **09.03.2023**

(51) International Patent Classification (IPC):
*H02J 50/12* (2016.01)   *H02J 50/80* (2016.01)
*H02J 50/90* (2016.01)   *H04B 5/00* (2024.01)

(52) Cooperative Patent Classification (CPC):
**H02J 50/12; H02J 50/80; H02J 50/90;** H04B 5/79

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **VAN WAGENINGEN, Andries**
**5656AG Eindhoven (NL)**

(74) Representative: **Philips Intellectual Property & Standards**
**High Tech Campus 52**
**5656 AG Eindhoven (NL)**

(54) **WIRELESS POWER TRANSFER**

(57)    A power transmitter (101) wirelessly providing power to a power receiver (105) comprises a driver (301) generating a drive signal for an output resonance circuit (103, 303) to generate an electromagnetic signal. A level determiner (315) determines a maximum electromagnetic signal level for the power transfer in response to a loading parameter representing a measured loading of a transmitter coil (103) in comparison to a reference loading. The reference loading is determined as a function of a position parameter, and the power receiver (105) transmits data indicative of the relationship between the position parameter and the reference loading for that specific power receiver (105). An adapter (321) adapts the function used to determine the reference loading based on the data received from the power receiver. An improved power transfer operation can be achieved by adapting the maximum power to the specific conditions.

FIG. 3

**Description**

FIELD OF THE INVENTION

The invention relates to a wireless power transfer system and in particular, but not exclusively, to the operation of a power transmitter providing inductive power transfer to high power devices, such as e.g. kitchen appliances.

BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2kW.

A potential problem with wireless power transfer is that power may unintentionally be transferred to e.g. metallic objects that happen to be in the vicinity of the power transmitter. For example, if a foreign object, such as e.g. a coin, key, ring etc., is placed upon the power transmitter platform arranged to receive a power receiver, the magnetic flux generated by the transmitter coil will introduce eddy currents in the metal objects which will cause the objects to heat up. The heat increase may be very significant and may be highly disadvantageous.

In order to reduce the risk of such scenarios arising, it has been proposed to introduce foreign object detection where the power transmitter can detect the presence of a foreign object and reduce the transmit power and/or generate a user alert when a positive detection occurs. For example, the Qi system includes functionality for detecting a foreign object, and for reducing power if a foreign object is detected. Specifically, Qi specification version 1.2.1, section 11 describes various methods of detecting a foreign object.

One method to detect such foreign objects is disclosed in WO2015018868A1. Another example is provided in WO 2012127335 which discloses an approach based on determining unknown power losses. In the approach, both the power receiver and the power transmitter measure their power, and the receiver communicates its measured received power to the power transmitter. When the power transmitter detects a significant difference between the power sent by the transmitter and the power received by the receiver, an unwanted foreign object may potentially be present, and the power transfer may be aborted for safety reasons. This power loss method requires synchronized accurate power measurements performed by the power transmitter and the power receiver.

For example, in the Qi power transfer standard, the power receiver estimates its received power e.g. by measuring the rectified voltage and current, multiplying them and adding an estimate of the internal power losses in the power receiver (e.g. losses of the rectifier, the receiver coil, metal parts being part of the receiver etc.). The power receiver reports the determined received power to the power transmitter with a minimum rate of e.g. every four seconds.

The power transmitter estimates its transmitted power, e.g. by measuring the DC input voltage and current of the inverter, multiplying them and correcting the result by subtracting an estimation of the internal power losses in the transmitter, such as e.g. the estimated power loss in the inverter, the primary coil, and metal parts that are part of the power transmitter.

The power transmitter can estimate the power loss by subtracting the reported received power from the transmitted power. If the difference exceeds a threshold, the transmitter will assume that too much power is dissipated in a foreign object, and it can then proceed to terminate the power transfer.

Alternatively, it has been proposed to measure the quality or Q-factor of the resonant circuit formed by the primary coil together with the corresponding capacitances and resistances. A reduction in the measured Q-factor may be indicative of a foreign object being present.

In some systems, the initialization of a power transfer is subject to a foreign object detection successfully being performed with the result that no foreign object detection is considered to present. However, if the test indicates that a foreign object may be present, the power transmitter will not initialize the power transfer. A Q-factor based test may often be advantageous for such operation.

The performance of the foreign object detection is subject to the specific operating conditions that are present when the test is actually performed. Further, foreign object detection is typically a very sensitive test where it is desired that relatively small changes caused by the presence of a foreign object is detected in an environment with possibly a large variation of the operating conditions and scenarios for which the test is being performed. In addition, the foreign object detection may be sensitive to variations in properties of the different power transmitters and power receivers that may be involved in the power transfer. For example, different power receiving devices may comprise different amounts of metal and the foreign object detection may often be very sensitive to such variations. Further, variations in the arrangement of the power transmitter and power receiver may change conditions and the foreign object detection may be dependent on the specific arrangement.

Therefore, foreign object detection tends to be suboptimal, and tests may be susceptible to generate false positives (detect a foreign object when none is present) or false negatives (not detecting a foreign object when present). This may lead to undesired situations, and in particular may lead to power transfers not being performed even when no foreign object is present.

Hence, an improved power transfer operation would be advantageous and, in particular, an approach allowing increased flexibility, reduced cost, reduced complexity, improved operation, more accurate power transfer operation, more flexible power transfer, improved suitability for higher power level transfers, improved adaptation to different power transmitters and/or power receivers, and/or improved performance would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided a power transmitter for wirelessly providing power to a power receiver via an electromagnetic signal; the power transmitter comprising: an output resonance circuit comprising a transmitter coil and at least one capacitor forming a resonance circuit; a driver arranged to generate a drive signal for the output resonance circuit to generate the electromagnetic signal; a measurer arranged to measure a loading parameter, the loading parameter being indicative of a loading of the transmitter coil during a time interval where power transfer is inactive; a position determiner arranged to determine a position parameter indicative of a position of the power receiver relative to the transmitter coil; a reference determiner arranged to determine a reference loading for the power receiver as a function of at least the position parameter, the reference loading being indicative of an estimated loading of the electromagnetic signal by the power receiver; a receiver arranged to receive data from the power receiver, the data comprising an indication of a relationship between the position parameter and the reference loading for the power receiver; an adapter for adapting the function in response to the indication of the relationship between the position parameter and the reference loading; a level determiner arranged to determine a maximum electromagnetic signal level for the electromagnetic signal during power transfer in response to the loading parameter in comparison to the reference loading; and wherein the driver is arranged to constrain the drive signal such that the electromagnetic signal does not exceed the maximum electromagnetic signal level during power transfer.

The invention may provide improved and/or facilitated performance and/or operation and/or implementation of a wireless power transfer system. The approach may provide an improved approach to adapting to the potential presence of any foreign objects being present. The approach may allow an approach where power transfer may in some scenarios proceed despite a foreign object potentially being present while simultaneously ensuring safe operation and preventing unacceptable heating of the foreign object.

The approach may provide improved adaptation and may in particular provide an improved adaptation of the maximum electromagnetic signal level to the specific conditions currently being experienced, and in particular it may adapt to not only properties of the specific power receiver, but also to the current arrangement of the power transmitter and power receiver (and specifically to the positioning of the power receiver relative to the power transmitter.

In many embodiments, the determiner may be arranged to determine at least two different non-zero values of the maximum electromagnetic signal level for different values of the loading parameter. In many embodiments, the maximum electromagnetic signal level may be a monotonic function of a difference measure for the loading parameter value and the reference loading (the difference measure being indicative of a difference between the loading parameter value and the reference loading). In many scenarios, the approach may allow a higher level for power transfer to be supported without unacceptably increasing the risk of e.g. heating or other power dissipation in any foreign objects present.

The loading parameter may be indicative of a total loading of the transmitter coil. The loading parameter may be indicative of a loading of the transmitter coil by any objects. The loading parameter may be indicative of a loading of the transmitter coil by any foreign objects. Foreign objects may be other objects than the power receiver or power transmitter. The loading parameter may be indicative of a total load/ impedance provided to the drive signal by the output resonance circuit/ transmitter coil. The load/ impedance may reflect a total magnetic coupling/ loading of the electromagnetic signal.

The loading parameter may be a measure of a (total) loading of the transmitter coil. The loading parameter may be an indication/measure of an equivalent series resistance of the transmitter coil. The loading parameter may be an indication/measure of a contribution to the equivalent series resistance of the transmitter coil by external material such as that of the power receiver and foreign objects. The loading parameter may be an indication/measure of a (total) power being extracted from the electromagnetic signal generated by the transmitter coil.

In some embodiments, the driver may comprise a function for setting a power level of the drive signal in response to power error/ control messages received from the power receiver, the setting of the power level being constrained such that the electromagnetic field signal does not exceed the maximum electromagnetic signal level during power transfer.

The electromagnetic signal may be an electromagnetic field generated by the transmitter coil when the drive signal is applied to the output resonance circuit. The loading of the transmitter coil may be a loading of the electromagnetic signal/ electromagnetic field generated by the transmitter coil when the drive signal is applied to the output resonance circuit. The electromagnetic signal (in particular during power transfer) may also be referred to as a power transfer signal.

In many embodiments, the time interval where power transfer is inactive may be a time interval prior to a power transfer/ power transfer phase being initiated. The time interval may be a time interval during a power transfer initialization phase. In some embodiments, the time interval where power transfer is inactive may be a time interval of a power transfer phase during which power transfer is suspended.

In many embodiments, the driver may be arranged to constrain the drive signal during a power transfer time interval or power transfer phase following the time interval where the power transfer is inactive.

In some embodiments, the transmitter coil may be one out of a plurality of transmitter coils generating an electromagnetic signal for power transfer to the power receiver. In such cases, the loading parameter may be a parameter indicative of a loading of the electromagnetic field generated by the combination of the transmitter coils (and thus also of the transmitter coil).

In accordance with an optional feature of the invention, the position parameter includes a coupling parameter indicative of a coupling between the transmitter coil and the power receiver.

This may allow particularly advantageous operation and/or performance in many embodiments. It may in many embodiments allow a particularly accurate determination of a suitable maximum electromagnetic signal level for the current operating conditions.

In accordance with an optional feature of the invention, the position parameter includes a coupling factor for the power transmitter coil and the power receiver coil.

This may allow particularly advantageous operation and/or performance in many embodiments. It may in many embodiments allow a particularly accurate determination of a suitable maximum electromagnetic signal level for the current operating conditions.

In accordance with an optional feature of the invention, the position parameter includes an inductance value of the transmitter coil.

This may allow particularly advantageous operation and/or performance in many embodiments. It may in many embodiments allow a particularly accurate determination of a suitable maximum electromagnetic signal level for the current operating conditions.

In accordance with an optional feature of the invention, the position parameter includes a resonance frequency of the resonance circuit.

This may allow particularly advantageous operation and/or performance in many embodiments. It may in many embodiments allow a particularly accurate determination of a suitable maximum electromagnetic signal level for the current operating conditions.

In accordance with an optional feature of the invention, the loading parameter includes an equivalent series resistance for the transmitter coil.

This may allow particularly advantageous operation and/or performance in many embodiments. It may in many embodiments allow a particularly accurate determination of a suitable maximum electromagnetic signal level for the current operating conditions.

In accordance with an optional feature of the invention, the relationship is indicative of an equivalent series resistance for a range of different positions of the power receiver relative to a position of a reference transmitter coil.

This may allow particularly advantageous operation and/or performance in many embodiments. The relationship may in particular be indicative of a equivalent series resistance for (each of) a range of different positions of the power receiver relative to a position of a reference transmitter coil.

In accordance with an optional feature of the invention, the loading parameter includes a quality factor for the transmitter coil.

This may allow particularly advantageous operation and/or performance in many embodiments. It may in many embodiments allow a particularly accurate determination of a suitable maximum electromagnetic signal level for the current operating conditions.

In accordance with an optional feature of the invention, the relationship is indicative of a quality factor for the resonance circuit for a range of different positions of the power receiver relative to a position of a reference transmitter.

This may allow particularly advantageous operation and/or performance in many embodiments. The relationship may in particular be indicative of a quality factor for (each of) a range of different positions of the power receiver relative to a position of a reference transmitter coil.

In accordance with an optional feature of the invention, the relationship is a linear function relating a value of the position parameter to a value of the reference loading; and the data comprises at least one of an indication of a gradient of the linear function and an offset of the linear function.

This may allow particularly advantageous operation and/or performance in many embodiments. It may in many embodiments allow for facilitated operation and implementation with e.g. reduced complexity, resource demand, and/or communication overhead, yet still provide highly advantageous performance with typically an accurate determination of a suitable maximum electromagnetic signal level.

In accordance with an optional feature of the invention, the data comprises at least two sets of related values for the loading parameter and the position parameter, and the adapter is arranged to determine the function to match the sets of related values.

This may allow particularly advantageous operation and/or performance in many embodiments. It may in many embodiments allow for facilitated operation and implementation with e.g. reduced complexity, resource demand, and/or communication overhead, yet still provide highly advantageous performance with typically an accurate determination of a suitable maximum electromagnetic signal level.

In accordance with an optional feature of the invention, the function is further dependent on a frequency of the drive signal; the data further comprises an indication of a relationship between a frequency of the power transfer signal and the reference loading; and the adapter is arranged to adapt the function in response to the indication of the relationship between the frequency of the power transfer signal and the reference loading.

This may allow particularly advantageous operation and/or performance in many embodiments.

According to an aspect of the invention there is provided a power receiver for wirelessly receiving power from a power transmitter via an electromagnetic signal, the power receiver comprising: an inductive power extraction element arranged to extract power from the electromagnetic signal during power transfer time intervals of a power transfer phase; a communicator arranged to transmit data to the power transmitter; a communication controller arranged to control the communicator to transmit at least one message to the power transmitter prior to the power control phase; the at least one message comprising data indicative of a relationship between a position parameter and a reference loading for the power receiver, the reference loading being an estimated loading of the electromagnetic signal for a reference power transmitter and the position parameter being indicative of a position of the power receiver relative to a transmitter coil of the reference power transmitter.

According to an aspect of the invention there is provided a method of operation for power transmitter wirelessly providing power to a power receiver via an electromagnetic signal, the power transmitter comprising: an output resonance circuit comprising a transmitter coil and at least one capacitor forming a resonance circuit; and the method comprising: generating a drive signal for the output resonance circuit to generate the electromagnetic signal; measuring a loading parameter, the loading parameter being indicative of a loading of the transmitter coil during a time interval where power transfer is inactive; determining a position parameter indicative of a position of the power receiver relative to the transmitter coil; determining a reference loading for the power receiver as a function of at least the position parameter, the reference loading being indicative of an estimated loading of the electromagnetic signal by the power receiver; receiving data from the power receiver, the data comprising an indication of a relationship between the position parameter and the reference loading for the power receiver; adapting the function in response to the indication of the relationship between the position parameter and the reference loading; determining a maximum electromagnetic signal level for the electromagnetic signal during power transfer in response to the loading parameter in comparison to the reference loading; and constraining the drive signal such that the electromagnetic signal does not exceed the maximum electromagnetic signal level during power transfer.

According to an aspect of the invention there is provided a method of operation for a power receiver wirelessly receiving power from a power transmitter via an electromagnetic signal, the power receiver comprising: extracting power from the electromagnetic signal during power transfer time intervals of a power transfer phase; and transmitting a message to the power transmitter prior to the power control phase; the message comprising data indicative of a relationship between a position parameter and a reference loading for the power receiver, the reference loading being an estimated loading of the electromagnetic signal for a reference power transmitter and the position parameter being indicative of a position of the power receiver relative to a transmitter coil of the reference power transmitter.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

Fig. 1 illustrates an example of elements of a power transfer system in accordance with some embodiments of the invention;
Fig. 2 illustrates an example of an equivalence circuit for the power transfer system of Fig. 1;
Fig. 3 illustrates an example of elements of a power transmitter in accordance with some embodiments of the invention;
Fig. 4 illustrates an example of a half bridge inverter for a power transmitter;
Fig. 5 illustrates an example of a full bridge inverter for a power transmitter;
Fig. 6 illustrates an example of elements of a power receiver in accordance with some embodiments of the invention;
Fig. 7 illustrates an example of a relative placement of a power transmitter and a power receiver;
Fig. 8 illustrates an example of a relative placement of a power transmitter and a power receiver;
Fig. 9 illustrates an example of a relationship between a quality factor and a coupling factor for different relative placements of a power transmitter and a power receiver;

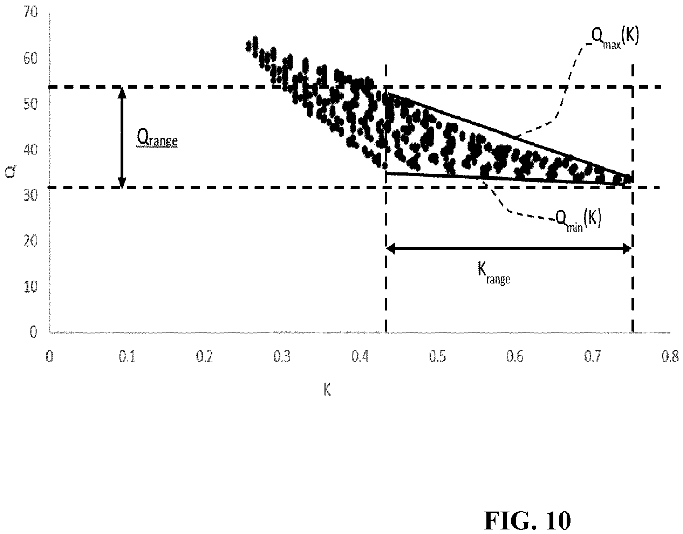

Fig. 10 illustrates an example of a relationship between a quality factor and a coupling factor for different relative placements of a power transmitter and a power receiver; and
Fig. 11 illustrates examples of equivalent electrical circuits of a power transmitter and a reference power transmitter.

DETAILED DESCRIPTION OF THE EMBODIMENTS

The following description focuses on embodiments of the invention applicable to a wireless power transfer system utilizing a power transfer approach such as known from the Qi Specification or the Ki Specification. However, it will be appreciated that the invention is not limited to this application but may be applied to many other wireless power transfer systems.

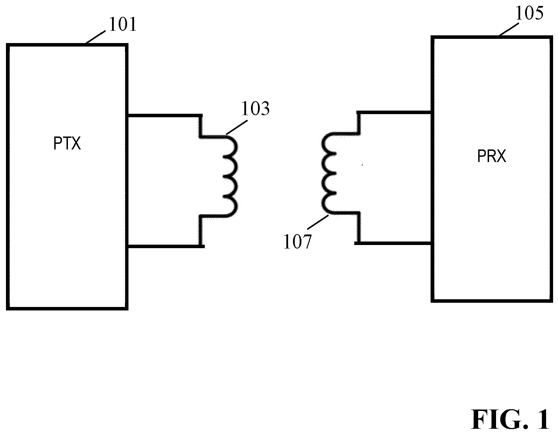

Fig. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an inductive electromagnetic signal which may inductively transfer power from the power transmitter 101 to the power receiver 105. Specifically, the power transmitter 101 generates an electromagnetic signal, which is propagated as a magnetic flux by the transmitter coil or inductor 103. The electromagnetic signal is a signal generated by the transmitter coil 103 in response to a drive signal being provided to the transmitter coil 103. During power transfer the electromagnetic signal transfers power to the power receiver 105 (and specifically to the receiver coil 107) and it will in the following be referred to as the power transfer signal.

The power transfer signal may typically have a frequency between around 20 kHz to around 500 kHz, and often for Qi compatible systems typically in the range from 95 kHz to 205 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.2, in the range up to 100W for higher power applications such as power tools, laptops, drones, robots etc., and in excess of 100 W and up to more than 2000W for very high power applications, such as e.g. for Ki kitchen applications.

In the following, the operation of the power transmitter 101 and the power receiver 105 will be described with specific reference to an embodiment generally in accordance with the Qi or Ki Specifications (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

For many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

In most power transfer systems, before power transfer is initiated, a communication channel between the power transmitter 101 and the power receiver 105 is established. When the communication has been set up and identification of the two devices has been achieved, the power transmitter 101 may start power transmission to the power receiver 105.

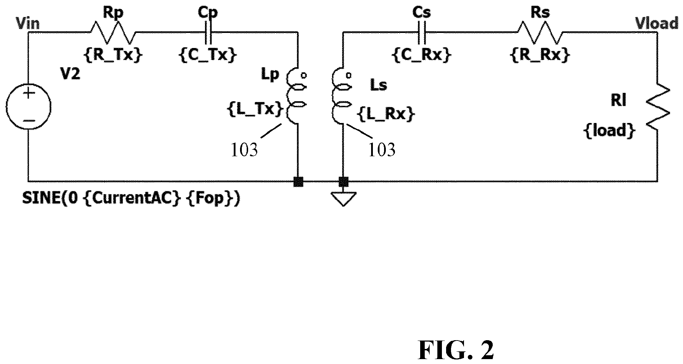

An example of an electrical equivalence diagram for the power transfer function of the power transmitter 101 and the power receiver 105 is illustrated in FIG. 2. A wide range of power transmitters and power receivers may exist in a given system and these may have substantially different properties and parameters. For example, the coil sizes, induction values, and loads may vary substantially. Accordingly, the system parameters, as specifically represented in FIG. 2, may in practice vary significantly between different devices, mechanical constructions, positioning etc. In particular, the placement of the power receiver, and thus the relative positions of the receiver coil 107 and the transmitter coil 103, substantially affect the coupling between the coils, i.e. the primary (power transmitter side) inductor Lp and the secondary (power transmitter side) inductor Ls, and thus may significantly change the system behavior.

Furthermore, the power receiving devices may have several different modes in which they operate, such as for example with different Voltage levels (5V, 12V, 20V) to power the load.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The appliance sends this error signal to the power control function in the power transmitter to reduce the static error, ideally to zero.

However, since the system performance and operation vary greatly depending on the existing power transmitter and power receiver combination and placements, the appropriate operating point also varies greatly. This includes the conditions at start-up/ initialization of a power transfer.

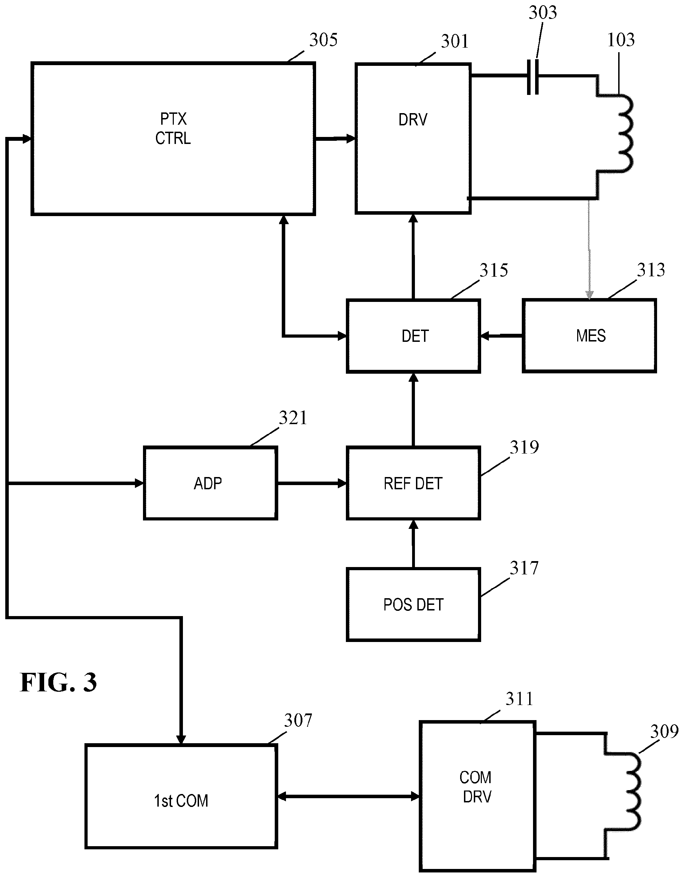

Fig. 3 illustrates elements of the power transmitter 101 of Fig. 1 in more detail.

The power transmitter 101 includes a driver 301 which can generate a drive signal that is fed to the transmitter coil 103 which in return generates the electromagnetic power transfer signal thereby providing a power transfer to the power receiver 105. The transmitter coil 103 is part of an output resonance circuit which comprises the transmitter coil 103 and a capacitor 303. In the example, the output resonance circuit is a series resonance circuit, but it will be appreciated that in other embodiments, the output resonance circuit may be a parallel resonance circuit. It will be appreciated that any suitable resonance circuit may be used including one including multiple inductors and/or capacitors.

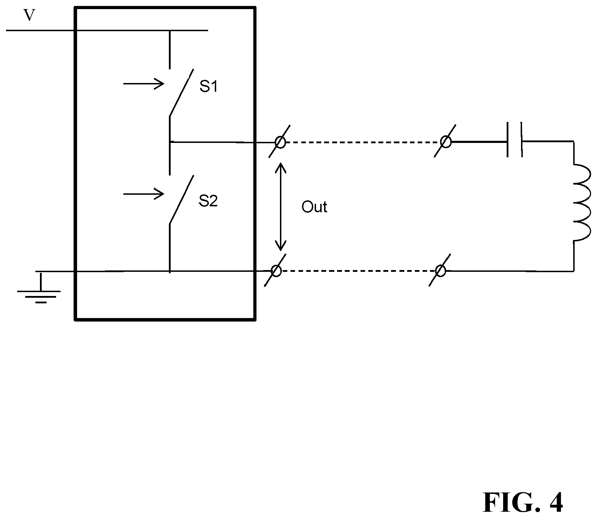

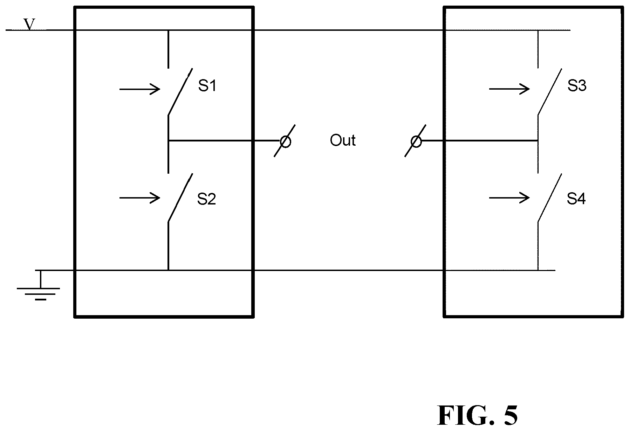

The driver 301 generates the current and voltage which is fed to the output resonance circuit and thus to the transmitter coil 103. The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S 1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The use of a resonance circuit including the transmitter coil 103 is well known to provide a more efficient power transfer in many scenarios and enables control of the power transfer by the frequency of the drive signal. Furthermore, having a power receiver which also employs a resonance circuit, i.e. where the receiver coil 107 is part of a resonance circuit, may result in resonant power transfer which enables a highly efficient power transfer.

The power transmitter 101 further comprises a power transmitter controller 305 which is arranged to control the operation of the power transmitter 101 in accordance with the desired operating principles. Specifically, the power transmitter 101 may include many of the functionalities required to perform power control in accordance with the Qi Specification or the Ki Specification.

The power transmitter controller 305 is in particular arranged to control the generation of the drive signal by the driver 301, and it can specifically control the power level of the drive signal, and accordingly the level of the generated power transfer signal. The power transmitter controller 305 comprises a power loop controller controlling a power level of the power transfer signal in response to the power control messages received from the power receiver 105 during the power transfer phase.

The power transmitter controller 305 may further comprise functionality for communicating with the power receiver 105. For example, the power transmitter controller 305 may be arranged to transmit data to the power receiver 105 by modulating the power transfer signal and receive data from the power receiver 105 by detecting load modulation of the power transfer signal. It will be appreciated that in other embodiments, other means of communication may be used such as e.g. a separate communication functionality such as NFC communication may be implemented.

In the example of the power transmitter of FIG. 3, the power transmitter 101 comprises a first communicator 307 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 309. The power transmitter specifically comprises a communication driver 311 which is coupled to the first communication coil 309. The communication driver 311 is arranged to generate a communication drive signal which is fed to the first communication coil 309 to generate the communication carrier signal. The communication driver 311 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz. Specifically for an NFC implementation, the communication carrier signal frequency may be 13.56 MHz.

The first communicator 307 is coupled to the communication driver 311 and is arranged to control this to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

In some embodiments, the first communicator 307 may for example receive data to be transmitted to the power receiver from the power transmitter controller 203 and in response generate a control modulation signal that is fed to the communication driver 311. The control modulation signal may for example be a binary signal that matches the data to be transmitted and the communication driver 311 may be arranged to generate the communication drive signal to have corresponding amplitude variations.

For communication from the power receiver to the power transmitter, the modulation of the communication drive signal may be a load modulation. The power receiver may be arranged to modulate the communication drive signal by varying a loading of the communication drive signal generated by the communication coil 309 in accordance with the data to be transmitted. The first communicator 307 may be arranged to sense variations in the voltage and/or current of the communication coil 307 and to demodulate the load modulation based on these. In typical embodiments, the first communicator 307 may for example receive data from the power receiver AND forward it to the controller 203 for controlling the power transfer signal or to the adapter 321.

Although Fig. 3 illustrates the communication elements 307 and 311 as separate entities, they may also be implemented as integral parts of 305 and 301. In these implementations, the communication driver 311 may be an integral part of the of the driver 301 and the first communicator 307 may be an integral part of the power transmitter controller 305. Moreover, the transmitter coil 103 may be used as communication coil and the communicator 307 / controller 305 may use the power signal as communication drive signal. In some embodiments (such as many embodiments being based on the Qi Specifications), the communication may use the power transfer signal as a communication carrier.

In some embodiments, the communication may be in accordance with the Near Field Communication, NFC, Specifications and the power receiver may specifically include NFC functionality. In these embodiments, the first communicator 307, communication driver 311, and first communication coil 309 may implement (at least) the functionality of an NFC reader. Thus, in some embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

The communication may specifically during the power transfer phase be performed in communication time intervals. Specifically, the transmitter controller 203 may comprise/ implement a synchronizer which is arranged to synchronize the first communicator 307 such that the communication operation (typically both receiving and transmitting data) is performed in (and typically only in) the communication time intervals of the power transfer phase, i.e. in the time intervals that are assigned for communication.

This may substantially improve communication performance and in particular may reduce interference from the power transfer signal to the communication signal.

The approach may in some embodiments utilize a time division approach during the power transfer phase wherein operations, such as foreign object detection and communication, and the main power transfer may e.g. be performed in different time intervals thereby allowing the interference between these (specifically the impact of the power transfer on the foreign object detection/ communication) to be reduced substantially.

In some embodiments, the power signal may be shortly interrupted by one or multiple events in order to perform taking measurements for improved foreign object detection.

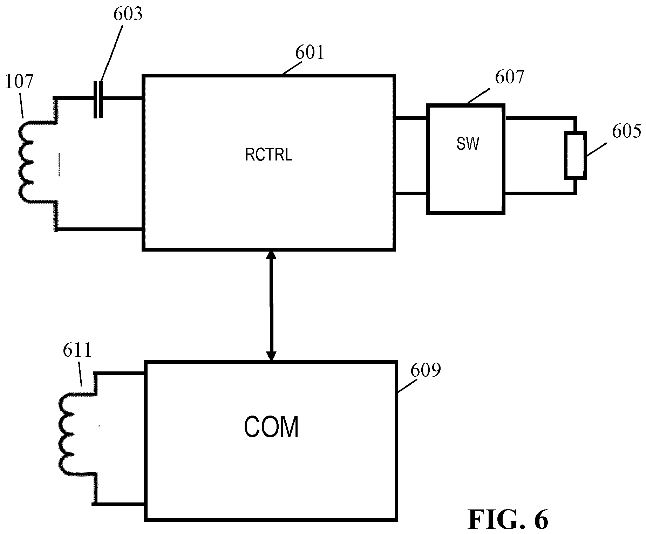

FIG. 6 illustrates some exemplary elements of the power receiver 105.

The receiver coil 107 is coupled to a power receiver controller 601 via a capacitor 603 which together with the receiver coil 107 forms an input resonance circuit. Thus, the power transfer may be a resonant power transfer between resonance circuits.

The power receiver controller 601 couples the receiver coil 107 to a load 605 via a switch 607 which specifically may be capable of connecting, disconnecting (or even shorting) the load 605. The power receiver controller 601 includes a power control path which converts the power extracted by the receiver coil 107 into a suitable supply for the load 605. In some embodiments, the power receiver controller 601 may provide a direct power path which simply connections the input resonance circuit to the switch 607 or load 605, i.e. the power path of the power transmitter controller 303 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Qi or Ki Specifications.

The power receiver controller 601 may further comprise functionality for communicating with the power transmitter 101. For example, it may be arranged to decode and demodulate data modulated onto the power transfer signal and it may be arranged to transmit data to the power transmitter 101 by load modulating the power transfer signal. In some embodiments, a separate communication function, such as an NFC communication function may be employed.

In the example of the power receiver of FIG. 6, the power receiver 105 comprises a second communicator 609 and a second communication coil 611. The second communication coil 611 is arranged to couple to the first communication coil 309 and thus the communication carrier signal induces a current (at least an emf) in the second communication coil 611.

The second communicator 609 is coupled to the second communication coil 611 and is arranged to determine amplitude variations in the induced signal and to demodulate amplitude modulations of the communication carrier signal. Thus, the second communicator 609 is arranged to decode data transmitted from the power transmitter by amplitude modulation of the communication carrier signal. It will be appreciated that in other embodiments, the second communicator 609 may be arranged to decode data modulated onto the communication carrier signal using other modulation formats such as frequency or phase modulation.

The second communicator 609 is further arranged to load modulate the communication carrier signal in order to transmit data from the power receiver to the power transmitter. Specifically, the second communicator 609 may comprise a load (such as a capacitor) which depending on the data to transmit can be switched between being coupled to the second communication coil 611 and not being coupled to the second communication coil 611. These load modulations may then be detected by the first communicator 307 of the power transmitter.

Although Fig. 6 illustrates the second communicator 609 as separate entity, it may also be implemented as integral part of the power receiver controller 601. Moreover, the receiver coil 107 coil may be used as communication coil and the communicator 609 / controller 601 may use the power signal as communication carrier. In some embodiments (such as many embodiments being based on the Qi Specifications), the communication may use the power transfer signal as a communication carrier. The communication from the power transmitter to the power receiver may use amplitude, frequency, or phase modulation of the power transfer signal, and the communication from the power receiver to the power transmitter may be by load modulation of the power transfer signal.

In the specific example, the second communication coil 611 and the second communicator 609 may provide NFC compatible communication operation. Specifically, the second communication coil 611 may be arranged to provide functionality corresponding to an NFC tag and to decode data that has been ASK modulated onto the communication carrier signal in accordance with the NFC specifications.

Thus, the second communicator 609 is arranged to transmit data to the power transmitter by varying the loading of the second communication coil 611 in response to data to be transmitted to the power transmitter 101. The load variations are then detected and demodulated by the power transmitter 101 as will be known to the person skilled in the art.

In the example, the second communicator 609 is furthermore arranged to demodulate amplitude, frequency, and/or phase modulation of the communication carrier signal in order to retrieve data transmitted from the power transmitter.

In operation, the system is arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

At regular, and typically frequent, intervals, the power receiver transmits a power control error message to the power transmitter. The power receiver 105 comprises functionality for supporting such a power control loop, e.g. the power receiver controller 601 may continuously monitor the power or voltage of a load signal provided to the load and detect whether this is above or below a desired value. It may at regular intervals generate a power control error message which requests that the power level of the power transfer signal is increased or decreased, and it may transmit this power control error message to the power transmitter.

When receiving a power control error message from the power receiver, the transmit controller 305 may determine how the drive signal parameter should be modified to increase or decrease the power level of the power transfer signal as requested. It may then control and adapt the drive signal parameter accordingly.

A power control loop is accordingly employed which controls a power property of the power transfer signal to result in the desired operating point at the power receiver. The operation of the power transfer is thus controlled by a power control loop and the effective operation of this is critical to the performance of the system. Initializing or adapting the power control loop to the operation conditions is thus critical for optimum performance.

The power transmitter of FIGs. 1 and 3 comprise functionality for adapting the operation of the power transfer system to be more flexible than many existing approaches. Specifically, the power transmitter may be arranged to control the power transfer to more dynamically and flexibly adapt to the current conditions, such as e.g. to the likelihood that a foreign object is present. The power transmitter may be arranged to perform measurements/ estimates of the power transfer signal during a time interval where no power transfer is ongoing, such as during a power transfer initialization, and based on those measurements it may flexibly constrain the generated electromagnetic signal level/ field strength.

The power transmitter 101 specifically comprises a measurer 313 which is arranged to measure a loading parameter which is indicative of the loading of the transmitter coil during a time interval where power transfer is inactive. The power transfer may be inactive in that the power being extracted from the power receiver being below a threshold (e.g. below 1mW, 5mW, 20mW, 100mW, 200mW, 0.5W or 1W). An inactive power transfer may mean that no power is transferred to the load (605) of the power receiver. The loading parameter is indicative of the loading of an electromagnetic signal generated by the transmitter coil 103 when fed by a drive signal. The loading parameter is indicative of the loading of an electromagnetic field that is (or would be) generated by the transmitter coil 103. The loading parameter may specifically be indicative of a loading that would be experienced by a drive signal being fed to the transmitter coil 103.

Thus, the loading parameter may reflect the energy or power that may be extracted from the electromagnetic field generated by the transmitter coil 103. This loading may include contributions from the receiver coil 107, any foreign objects present, as well as friendly metal etc. in both the power receiver and the power transmitter. However, in many embodiments, the loading parameter may be compensated for known effects such as the loading provided by the power transmitter itself (e.g. due to friendly metal in the power transmitter).

The loading parameter is thus indicative of the loading that is experienced during a time when there is no power transfer, such as specifically prior to starting power transfer or e.g. during time intervals of power transfer phase where the power is temporarily suspended.

The loading parameter may specifically indicate, or be a measure/ estimate of, the impedance of the power transmitter coil/ output circuit, and specifically the impedance as seen by the driver 301/ drive signal. The loading may specifically be determined as a measure of the current and/or voltage provided to the output circuit/ transmitter coil. The loading parameter may indicate the loading of the transmitter coil by objects loading the electromagnetic signal. The loading parameter may indicate the loading of the transmitter coil by objects in which the electromagnetic signal induces current. The loading parameter may typically indicate a total/ combined loading of the electromagnetic signal. The loading parameter may be an indication of a loading of the electromagnetic signal by other objects than the power receiver coil. The loading parameter may in many embodiments be indicative of a loading by any foreign objects being present. A foreign object may be any other object than the power receiver.

The loading parameter may be a measure/ an indication of the equivalent series resistance of the transmitter coil.

The loading parameter may be a measure/ an indication of the contribution to the equivalent series resistance of the transmitter.

The measurer 313 is coupled to a determiner 315 which implements a circuit/ function for determining a maximum electromagnetic signal level for the electromagnetic signal during power transfer as a function of the loading parameter relative to a reference loading (henceforth also referred to as the max level function). A maximum level for the electromagnetic field during power transfer may be determined as a function of the loading parameter relative to the reference loading. It will be appreciated that the maximum electromagnetic signal level may be a level for any parameter that is indicative of the electromagnetic signal level/ field strength. For example, in many embodiments, it may be represented by a maximum level of a property of the drive signal being fed to the transmitter coil 103. In particular, the determiner 315 may determine the maximum electromagnetic signal level as a maximum level or current level for the drive signal. In many embodiments, the determiner 315 may determine the maximum electromagnetic signal level as a maximum value for the current through the transmitter coil 103.

The determiner 315 is arranged to determine the maximum electromagnetic signal level value to have at least two different non-zero values for different values of the loading parameter, and typically as a max level function of the loading parameter with different possible values for different values of the loading parameter. In many embodiments, the maximum level is a continuous monotonic function of the loading parameter relative to the reference loading. In many embodiments, the determiner 315 may be arranged to determine the maximum level to possibly have no less than 3, 5, 10, or 25 different values (for different values of the loading parameter). In many embodiments, the maximum level may be a one to one continuous function of a difference between the loading parameter and the reference loading with the maximum level potentially having an infinite number of possible values.

The determiner 315 is coupled to the driver 301 which is fed the determined maximum level. The driver 301 is arranged to constrain the drive signal such that the electromagnetic field signal does not exceed the maximum electromagnetic signal level during power transfer. The driver 301 may be arranged to generate the electromagnetic signal, the power transfer signal, to vary during the power transfer, e.g., in response to the power control loop operation as previously described. However, the driver 301 may generate and adapt the drive signal subject to the requirement that the maximum level is not exceeded. For example, the maximum level may be a maximum current of the drive signal and the driver 301 may be arranged to limit the drive signal to not exceed this current.

Thus, in some embodiments, the driver is arranged to, during the power transfer phase/ operation, vary the electromagnetic signal/ power transfer signal in response to power control error messages received from the power receiver. However, the varying of the electromagnetic signal/ power transfer signal in response to power control error messages is constrained by the requirement that the maximum level is not exceeded.

Thus, rather than using a conventional approach of performing a foreign object detection test and starting power transfer only if no foreign object is present, the described approach may take a substantially more flexible approach where the electromagnetic level is constrained but adapted to the specific scenario.

The approach may in particular be used to provide an improved pre-power transfer adaptation to whether a foreign object is present or not.

The accuracy of conventional foreign object detection methods depends on the alignment of the power transmitter and power receiver coils. If the coils are not well aligned, the coupling between the coils is not good and magnetic field generated by the power transmitter coil may leak to metallic parts of the power receiver device (so called friendly metal). The relative position of the transmitter coil towards the power receiver device that contains metal parts influences the pre-power foreign object detection measurements at the power transmitter coil.

This may for example result in information provided by the receiver device on the expected / reference measurements not matching the actual measurements when the alignment of the coils differs from the alignment applied as reference.

If the power receiver coil is not well aligned to the power transmitter coil, or if it is at an increased distance, it may lead to undesired situations such as where the power transmitter may potentially not detect a foreign object. In addition, the power transmitter may provide a strong magnetic field to compensate for a weak coupling which may increase the power loss in the foreign object even more. Another unfortunate situation may be that the power transmitter falsely detects the friendly metal as being a foreign object and therefore it does not start power transfer.

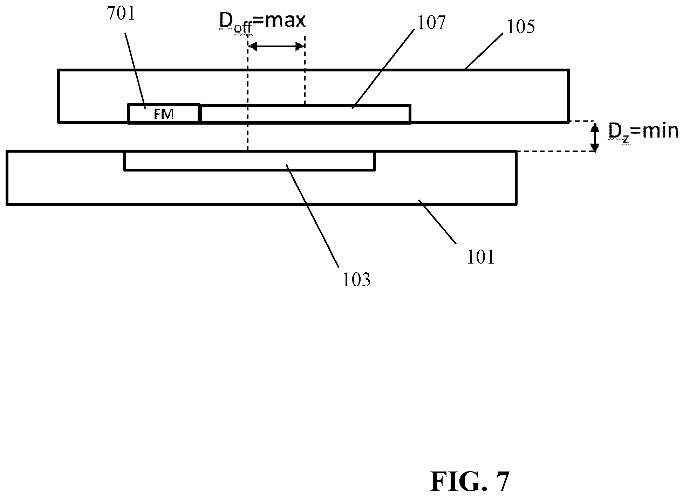

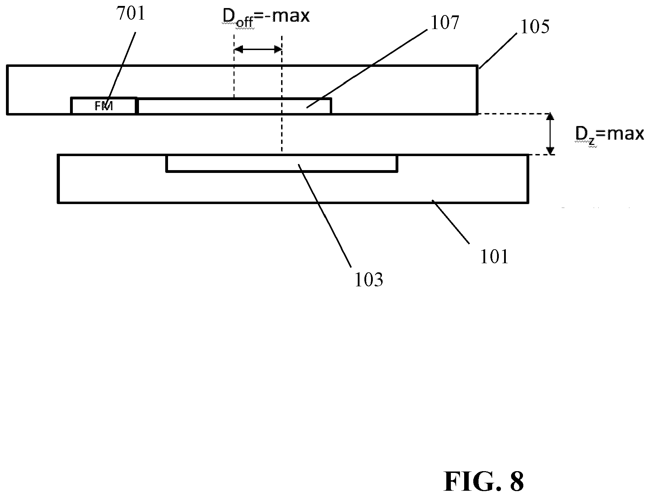

FIGs. 7 and 8 illustrate these problems for some different alignments of the coils for a pre-power foreign object detection based on Q factor measurements. In the examples, the power receiver 105 includes some friendly metal 701 positioned next to the receiver coil 107. The friendly metal will load the electromagnetic field generated by the transmitter coil 103.

If the power transmitter performs foreign object detection by determining a Q factor for the output resonance circuit comprising the transmitter coil 103 then the friendly metal will reduce the measured Q factor. The Q factor foreign object detection may determine the Q factor and consider a foreign object to be present if this is below a reference threshold. The reference threshold may be adapted to take into account that the friendly metal 701 of the power receiver 105 will reduce the Q factor, e.g. based on information transmitted to the power transmitter from the power receiver. However, the size of the degradation is dependent on the relative positioning of the power transmitter and power receiver and thus will typically be unknown for the current scenario.

As an example, the situation of FIG. 8 corresponds to that of FIG. 7 except that the power receiver device is shifted such that the friendly metal 701 (FM) is less exposed to the magnetic field of the transmitter coil. This increases the measured Q factor. Thus, the Q factor when no foreign object is present may vary substantially when the alignment between the power receiver and the power transmitter is changed.

Selecting a suitable reference threshold for detecting a foreign object may accordingly be very difficult. If the power receiver and power transmitter are aligned such that the friendly metal has minimum impact, the effect of a foreign object may not degrade the Q factor sufficiently to fall below the threshold. Conversely, if the power receiver and power transmitter are aligned such that the friendly metal has maximum impact, the Q factor may possibly fall below the reference threshold due only to the presence of the friendly metal and with no foreign object being present. Thus, the risk of false negatives or false positives may be higher than desired.

In the described approach, however, a loading parameter may be determined, and this may be considered as an indication helping to assess the presence/absence of a foreign object. However, rather than proceeding with or preventing power transfer based on whether a foreign object is considered to be present or not, the power transmitter of FIG. 2 proceeds to adaptively determine a maximum electromagnetic signal level for the power transfer and then continuing with the power transfer subject to the drive signal being constrained such that the maximum level is not exceeded.

Thus, a substantially more flexible approach that may allow power transfer to proceed while ensuring safe operation may be achieved.

In some embodiments, the loading parameter may be a quality factor parameter indicative of quality factor of the output resonance circuit. In some embodiments, the loading parameter may be an Equivalent Series Resistance (ESR) indication for the transmitter coil 103. The ESR indication may be any indication of the equivalent series resistance of the transmitter coil 103 for the current loading of the generated electromagnetic field.

The Q factor may for example be measured by a frequency sweep determining e.g. the 3dB bandwidth and calculating the Q value. The ESR may for example be measured based on a decay rate of a free running oscillation as will be described in more detail later.

It will be appreciated that various approaches for determining a Q factor and/or an ESR will be known to the skilled person and that any such suitable approach may be used.

The determiner 315 is arranged to determine the maximum electromagnetic signal level in response to the loading parameter in comparison to a reference loading. The reference loading may be a reference or nominal value for the loading parameter. For example, the reference loading may be a reference ESR or a reference Q factor, and the determiner 315 may be arranged to determine the maximum electromagnetic signal level as a function of the difference between the measured loading parameter and the reference loading. Typically, the larger the difference the lower the maximum electromagnetic signal level. Thus, in many embodiments, the maximum electromagnetic signal level is determined as a monotonically decreasing function of difference measure indicative of the difference between the measured loading parameter and the reference loading.

In some embodiments, the measured loading parameter may be compared to such a reference loading, e.g. indicating a desired or optimum value of the loading parameter. The maximum level of the power transfer signal may then be determined as a monotonic function of the difference between the measured value and the reference value. Specifically, the closer the measured loading parameter value is to the reference value, the higher the maximum level.

This may thus reflect that the closer the actual loading parameter value currently is to the preferred optimum value, the less potential loss in a foreign object may occur. In other words, it may be considered that the closer the value of the loading parameter is to the optimum value indicated by the reference loading, the lower the value of the power that could possibly be dissipated in a potential foreign object if that were present.

Further, in the approach, the reference loading is not merely a static or predetermined value but is one that is adapted, and which may be determined dynamically based on the specific conditions currently experienced, and in particular based on the specific properties of the power receiver and the relative placement of this with respect to the power transmitter.

The power transmitter comprises a position determiner 317 arranged to determine a position parameter that is indicative of a position of the power receiver 105 relative to the transmitter coil 103 and a reference determiner 319 which is arranged to determine the reference loading as a function of (at least) the position parameter (which henceforth may also be referred to as the reference function). The reference loading is determined to be indicative of an estimated loading of the electromagnetic signal by the power receiver and the reference function is arranged to generate the reference loading as a function of the position parameter such that it reflects the expected loading of the electromagnetic signal by the power receiver for different relative position offsets between the power transmitter and the power receiver.

For example, the reference function may generate the reference loading as monotonically increasing or decreasing function of a distance indication indicative of a difference between the current position of the power receiver (as indicated by the determined position parameter) and an ideal position of the power receiver relative to the power transmitter.

In many embodiments, the reference function may be selected/ designed to generate a reference loading that corresponds to the expected loading of the electromagnetic signal by the power receiver, and thus the difference between the measured loading parameter and the reference loading will be indicative of a loading of the electromagnetic signal by other entities than the power receiver.

Further, in the approach, the reference function that is used to generate the reference loading as a function of the position parameter is not a predetermined or fixed function. Rather, the function is a variable function that is adapted/ controlled by data transmitted to the power transmitter from the power receiver.

In the example, the power receiver controller 601 is arranged to control the second communicator 307 to transmit a message to the power transmitter which includes data that is indicative of a relationship between the position parameter and the reference loading for the specific power receiver 105. The message is transmitted prior to the power transfer phase and provides information of the specific relationship between the reference loading and the position parameter for the specific properties of the specific power receiver, and thus can reflect how much metal is present in the power receiver, how this is distributed, etc.

The first communicator 307 is arranged to receive this message and forward the data contained therein to an adapter 321 which is further coupled to the reference determiner 319. The adapter 321 is arranged to adapt the reference function used to determine the reference loading from the position parameter. For example, in many embodiments, the message received from the power receiver may directly define the reference function to be used and the reference determiner 319 may proceed to determine the reference loading by applying this specific function to the position parameter determined by the position determiner 317.

Thus, in the approach, the power transmitter is arranged to perform a sophisticated and graduated constraint of the power transfer signal based on a detailed and adapted evaluation that reflects not only the current operating conditions (as reflected by the position parameter) but also the specific properties and characteristics of the power receiver that is to be powered. The approach may allow improved control, and constraining, of the power transfer signal such that this can adapt to the specific current operating scenario. It may in many scenarios allow a higher power level of the power transfer signal while still ensuring safe operation. Further, the approach is highly efficient with a low computational and communication overhead. It provides for a practical approach for adapting a wireless power transfer system comprising many different types of the power transmitters and power receivers with different parameters and properties. Indeed, the individual devices need only store properties of their specific properties, yet the approach supports adaptation to the specific combined properties of the power transmitter and the power receiver. For example, the reference function used to determine the reference loading as a function of the position parameter may during manufacturing and design be optimized/customized for the specific power transmitter but with some parameters being variable. The power transmitter may then receive information from the power receiver which it can use to adapt the variable parameters to reflect the specific properties of the power receiver.

In many embodiments, the properties of the power receiver may have a dominant effect on the estimation of the loading of the electromagnetic signal by the power receiver and the power transmitter effect may be relatively minor (or compensated in other ways). Accordingly, in many applications and scenarios, the reference function to be used may be fully defined by the data from the power receiver, and indeed the power receiver may transmit data which fully describes a function of determining the reference loading from the position parameter. In such cases, the power transmitter may often use this function directly, or in some embodiments it may possibly adapt the function, e.g. by making small changes or adjustments.

The position parameter may be indicative of a relative position of the power receiver with respect to the power transmitter, and more specifically with respect to the transmitter coil 103. The specific property and measure that is used as a position parameter being indicative of this relative position will depend on the specific preferences and requirements of the individual embodiment, and it will be appreciated that any suitable parameter being dependent on/varying with/ indicating such a relative position may be used.

In some embodiments, the position parameter may comprise or consist in a coupling parameter which is a measure of the coupling between the transmitter coil 103 and the power receiver 105, and in particular it may include a coupling factor for the power transmitter coil 103) and the power receiver coil (105).

Such a coupling factor may be indicative of the coupling between the transmitter coil 103 and the receiver coil 107. A high coupling factor may indicate that the transmitter coil 103 and the receiver coil 107 are closely aligned and that they are accordingly positioned close to each other, whereas a lower coupling factor may indicate that transmitter coil 103 and the receiver coil 107 are further apart. Thus, the coupling factor may be a good indication of the relative position/ alignment of the transmitter coil 103 and the receiver coil 107, and thus of the power transmitter 101 and the power receiver 105. In some embodiments, the position parameter may be a coupling measure that also reflects a coupling to other parts of the power receiver, such as a coupling to metallic parts of the power receiver. Such a coupling may reflect not only the relative position of the power receiver, but also in some cases the orientation of the power receiver (if the power receiver has an asymmetric arrangement of metal). For example, a metal part of the power receiver may shield part of the electromagnetic field generated by the power transmitter such that this part does not contribute to the coupling between the transmitter coil and the receiver coil. Depending on the relative position of the metal part to the receiver coil and the positioning of the power receiver relative to the transmitter coil, the metal part may shield the field differently and therefore influences the coupling between transmitter and receiver coil accordingly.

Different approaches may be used to determine a coupling factor K in different embodiments. In some embodiments, the power transmitter may proceed to measure/ estimate the coupling factor by determining one or more resonance frequencies for the power transmitter resonance circuit when loaded by the power receiver. The power receiver may be entered into a high-Q mode during such a measurement and the resonance frequency may be determined by the power transmitter by a frequency sweep of the signal driving the transmitter coil 103. Based on the resonance frequency, the coupling factor can be calculated based on the free running resonance frequencies of the power receiver resonance circuit and the power transmitter resonance circuit.

In some embodiments, the coupling factor may be determined based on a ratio between the voltage $u_2$ over the receiver coil 107 when unloaded and the voltage $u_1$ over the transmitter coil 103, and on the ratio between the self inductances of respectively the transmitter coil 103 ($L_1$) and the receiver coil 107 ($L_2$):

$$K = \frac{u_2}{u_1}\sqrt{\frac{L_1}{L_2}}$$

Measurements may be made by the power receiver 105 and communicated to the power transmitter 101.

In some embodiments, measurements of the inductance of the transmitter coil 103 may be made for a situation where the receiver coil 107 is open ($L_1$) and when it is short-circuited ($L_1'$). The coupling factor may then be determined from:

$$K = \sqrt{1 - \frac{L'_1}{L_1}}$$

In some embodiments, measurements of the effective resonance frequency of the output circuit may be made for a situation where the receiver coil 107 is open ($f_{res}$) and when it is short-circuited ($f_{res}'$). This may for example be implemented by the power receiver including a switch function at the receiver coil 107. The coupling factor may then be determined from:

$$K = \sqrt{1 - \frac{f_{res}^2}{f'_{res}^2}}$$

It will be appreciated that other approaches for determining or estimating a coupling factor K may be used in other embodiments.

In some embodiments, the position parameter may comprise or consist in an inductance value of the transmitter coil 103.

The inductance may for example be determined by:

$$L = \frac{1}{\omega_{res}^2 C}$$

where C is the capacitance of the output resonance circuit and $\omega_{res}$ is the angular resonance frequency of the output resonance circuit.

The capacitance C will be known, and the angular resonance frequency may be measured. For example, a frequency sweep may be performed and the frequency for the maximum voltage may be detected $\omega_{res} = 2\pi f_{res}$. As another example, the cycle time T between zero crossings at free running of the output resonance frequency may be measured and the angular resonance frequency may be determined as $\omega_{res} = \frac{2\pi}{T}$.

In many embodiments, the inductance may be a good indication or estimate of the alignment/ position of the power receiver with respect to the power transmitter.

In some embodiments, the position parameter may comprise or consist in a resonance frequency of the resonance circuit.

As indicated by the equation above, the resonance frequency and inductance of the transmitter coil 103 are closely related and the resonance frequency may accordingly also directly be used as an indicator of the position of the power receiver relative to the power transmitter coil.

In particular, a power receiver typically applies ferrite behind its receiver coil to bend the magnetic field back into the receiver coil and to reduce the field behind the ferrite. This has the advantages of increasing the self-inductance of the receiver coil, increase the mutual inductance with the power transmitter coil, and reduce the leakage of the field to metal parts and components in the power receiver product.

Depending on the position of the power receiver product to the power transmitter coil, the ferrite also influences the field near the transmitter coil and its inductance value. The closer the ferrite of the power receiver is to the power transmitter coil, the higher the inductance and with invariant capacitance in the resonance tank of the power transmitter, the lower the resonance frequency. Thus, in practice, this approach may provide particularly efficient operation due to the presence of ferrite in many practical power receivers.

The resonance frequency may often be relatively easy to determine/measure in practice, such as e.g. by performing a frequency sweep and measuring the coil current or voltage.

Thus, the power transmitter may determine a position parameter by measurement and use this to dynamically determine a reference loading which is used as a reference for the determiner 315 to determine a suitable maximum level of the power transfer signal. The approach allows the power transmitter to adapt this closely to the current operating conditions and context, and specifically allows the adaptation of the maximum level to reflect the positioning of the power receiver relative to the power transmitter. Such an adaptive and dynamic approach may typically allow the maximum level to be set substantially higher than if only worst case situations (such as a worst case position of the power receiver) are to be taken into account.

As previously mentioned, the loading parameter may in many embodiments comprise or consist in an equivalent series resistance, ESR, or a quality factor, Q, for the transmitter coil 103. These properties may provide a particularly advantageous measure of a potential loading of the power transfer signal and the presence and properties a potential foreign object, and thus provide a good basis for determining the maximum allowable level of the power transfer signal during the power transfer phase.

In the approach, further adaptation is achieved by not only determining the reference loading based on the position parameter thereby reflecting variations in the position of the power receiver but also adapting the reference function that is used for this determination based on data that is provided to the power transmitter from the power receiver.

The data provided by the power receiver is indicative of a relationship between the position parameter and the reference loading as it applies to that specific power receiver. The data may specifically be indicative of an expected relationship between an ESR or Q-factor and a coupling measure (factor), inductance, or resonance frequency.

The relationships may for example be determined during a manufacturing or design phase based on dedicated measurements. Such measurements may be performed using a reference transmitter and the resulting data may be stored in the power receiver for transmission to a power transmitter during operation.

The measurements may for example be determined by positioning the power receiver at different positions relative to the reference transmitter and measuring the ESR or Q-factor for these positions. It may further measure the coupling factor, inductance, or resonance frequency and store the corresponding results (and thus the relationship between a position parameter in the form of a (coupling factor, inductance, or resonance frequency) and the corresponding reference loading (in the form of a ESR or Q-factor) for that position). This process may be repeated for different positions of the power receiver relative to the reference position.

Accordingly, the data provided by the power receiver may reflect the expected conditions for a reference transmitter, and particularly the relationship data (position indication to loading relation) may include indications for a range of different positions of the power receiver relative to a position of a reference transmitter, and specifically relative to the coil of the reference transmitter.

Typically, a plurality of measurements may be made for each position and the data for a given position may typically reflect the lowest measured loading, and specifically may relate the minimum ESR and/or the maximum Q factor.

The different positions may in the data directly be represented by a position parameter, such as the coupling factor, inductance and/or resonance frequency. Thus, the data may provide the expected ESR or Q-factor for a reference transmitter and the specific power receiver for different the coupling factor, inductance and/or resonance frequency.

The power transmitter may in some embodiments simply use the provided data, i.e. it may be considered to be sufficiently similar to the reference power transmitter to be able to use the data directly. In other embodiments, the power transmitter may be arranged to compensate the determined reference loading to compensate for differences between the power transmitter and the reference power transmitter. For example, during manufacturing and design of the power transmitter it may be determined how the power transmitter itself loads the electromagnetic signal/ power transfer signal as this may vary dependent on the specific properties of the power transmitter, such as how much metal is included in the construction. This measurement may be compared to a nominal value for the power transmitter and a compensation value that reflects the relative loading difference between the power transmitter and the reference power transmitter. This compensation value may be stored and used by the reference determiner 319 to adapt the reference function provided by the power receiver to more closely reflect the properties of the current power transmitter.

In some embodiments, relationship data may be provided for different types of reference transmitters and the power transmitter may be arranged to select the data for the reference power transmitter that most closely resemble the current power transmitter. For example, during manufacturing and design of the power transmitter, measurements may be performed and compared to different reference power transmitters. The one that most closely matches the current power transmitter may be identified and the reference determiner 319 may be programmed to select and use the data provided by the power receiver for this reference power transmitter.

The data being communicated to allow adaptation of the reference function used by the reference determiner 319 may be different in different embodiments, but may in many embodiments directly define a reference function for determining the reference loading from the position parameter.

In some embodiments, the power receiver may be arranged to transmit data defining the loading parameter as a linear function of the position parameter. The data provided by the power receiver may specifically provide data which provides an indication of a gradient of the linear function and/or an offset value for the linear function. In some embodiments either the gradient or the offset may have a predetermined/ nominal value, and only one value is provided with the nominal value being used for the other parameter. For example, in some embodiments, the reference determiner 319 may be arranged to apply a nominal linear function with a nominal offset and nominal gradient unless specific values are provided by the power receiver in which case the specific value(s) replace(s) the nominal value(s).

Such an approach may provide a highly efficient operation in many embodiments. It may reduce the amount of data that needs to be communicated while allowing accurate setting of the maximum signal level.

In some embodiments, the power receiver may be arranged to transmit data that comprises two or more sets of related values for the loading parameter and the position parameter. The reference determiner 319 may then be arranged to determine the reference function such that it matches these sets of related values.

For example, in some embodiments, the reference function may be a predetermined function with variable parameters and these parameters may by the adapter 321 be determined adapted/ determined such that the resulting function matches the sets of values provided. For example, if two sets of matching values are provided and the function is predetermined to be a linear function, the gradient and offset values may be determined such that the resulting function for both provided values of the position parameter generates the provided loading parameter values.

In some embodiments, more complex predetermined functions may be used. For example, it may be predetermined that the reference function is piecewise linear, and the reference determiner 319 may proceed to generate the function by applying a linear interpolation between the provided sets of values. In yet other embodiments, a relatively large number of sets of related values may be provided and the reference determiner 319 may be arranged to perform a function or curve fitting to these values to generate the function to be used.

In some embodiments, the function for determining the reference loading may depend on multiple position parameters, for example on a combination of both the inductance value and the coupling factor.

In many embodiments, the reference function for determining the reference loading may be dependent only on the position parameter but in many other embodiments, it may be dependent on other parameters as well, such as on the frequency of the drive signal/power transfer signal.

In some embodiments, such a dependency may be included at the power transmitter side, and with the reference determiner 319 selecting and applying a function that includes a dependency on the frequency but without the power receiver providing specific information of this dependency.

However, in many embodiments, the data provided by power receiver may also include an indication of the relationship between a frequency of the power transfer signal and the reference loading and the adapter 321 may adapt the reference function accordingly.

For example, the loading of the power receiver on a reference transmitter coil may be measured over a frequency range with the range including both frequencies used for measuring the loading as well as frequencies used for the power transfer. Such a measurement may be performed for a reference positioning of the power receiver relative to the power transmitter, or even for multiple positions. In practice, the range can be relatively small and can be sufficiently small to establish a linear relation between frequency and loading parameter. The data may include the information on the (linear) relationship between the frequency of the power signal and the reference loading. This allows the power transmitter for example to determine the expected equivalent series resistance of its transmitter coil for a reference frequency by using the data indicating the relation between the position parameter and the loading parameter and then adapt the expected equivalent series resistance for the operating frequency using the data indicating the relation between frequency parameter and loading parameter.

In the power transmitter of FIG. 3, the maximum electromagnetic signal level may thus depend on a measured value of the loading parameter relative to a reference or nominal value of the loading parameter, namely the reference loading.

The reference or nominal value may be determined based on data received from the power receiver, and may specifically be one or more of the following:

- an ESR

- a Quality (Q) factor

The reference or nominal value may be one that corresponds to a maximum or optimum value for the loading parameter.

The reference loading may be determined by a function of one or more of the following:

- a coupling factor K
- a self-inductance L of the transmitter coil
- a resonance frequency of the output resonance circuit.

where the function is dependent on the data received from the power receiver.

In some embodiments, the power transfer phase may be subject to the loading parameter meeting a minimum requirement. If the loading parameter does not meet such a least acceptable value, no power transfer may be performed. However, if the threshold is passed, the maximum level may be dependent on the difference between the loading parameter and the reference loading. Typically, the maximum level may be a monotonic (typically increasing) function of this difference. Thus, the further the actual loading parameter value is from the minimum acceptable value, the higher the allowed signal level. This may e.g. be used to ensure that the total effect of any signal dissipated in a foreign object will still be acceptable if such an foreign object were present.

Thus, rather than simply deciding whether to perform power transfer or not, the power transmitter may constrain the signal level of the electromagnetic signal to result in acceptable performance even if a foreign object is present. The approach may provide a flexible approach where uncertainty of the cause of deviations from the optimum situation is handled to allow some power transfer while ensuring that even in the worst case scenario, this operation will be acceptable.

In some embodiments, the maximum signal level may be given as a power level value. Further, in many embodiments, the difference between the loading parameter and the reference loading may be compared to thresholds and the maximum level may be set to a predetermined value for the interval in which the current value falls.

For example, for a Q factor loading parameter, the determiner 315 may determine the difference $\Delta Q$ between the measured Q factor and the reference Q factor determined by the reference determiner 319, and e.g. implement the following rule:

| $\Delta Q \longleftrightarrow$ threshold | Max safe power signal(Q) |
|---|---|
| $\Delta Q <$ Thr1 | Level3 (15..30W) |

(continued)

| $\Delta Q \longleftrightarrow$ threshold | Max safe power signal(Q) |
|---|---|
| Thr1 <= $\Delta Q$ < Thr2 | Level2 (5..15W) |
| Thr2 <= $\Delta Q$ | Level1 (<5W) |

For a K factor position parameter, the determiner 315 may determine the difference $\Delta K$ between the measured K factor and the reference K factor determined by the reference determiner 319, and e.g. implement the following rule:

| $\Delta K \longleftrightarrow$ threshold | Max safe power signal (K) |
|---|---|
| $\Delta K$ < Thr1 | Level3 (15..30W) |
| Thr1 <= $\Delta K$ < Thr2 | Level2 (5..15W) |
| Thr2 <= $\Delta K$ | Level1 (<5W) |

In some embodiments, the determiner 315 may be arranged to determine a maximum transmitter coil current and the driver 301 may be arranged to constrain the drive signal to constrain the transmitter coil current to not exceed this value during power transfer. Further, the determination may be a continuous function of the difference between the loading parameter and the reference loading. For example, a maximum transmitter coil current $I_{max}$ may be determined based on a loading parameter in the form of a measured quality factor Q relative to the reference Q as:

$$I_{max} = I_{ref} \frac{Q}{Q_{ref}}$$

where $Q_{Ref}$ is the reference Q for the power transmitter and power receiver and $I_{ref}$ is suitable reference current.
The maximum level being a maximum transmitter coil current level/ value may provide particularly efficient operation in many scenarios and embodiments. The generated electromagnetic field strength is directly given by the transmitter coil current and thus the potential power level that can be induced in a foreign object is directly controlled by the transmitter coil current.
In some embodiments, the determination of the maximum level, and specifically the maximum level of a transmitter coil current, is dependent on determining an equivalent series resistance measure which is indicative of the ESR of the transmitter coil 103. The measured/actual ESR may then be compared to a reference loading in the form of a minimum expected Equivalent Series Resistance for the power receiver and power transmitter arrangement.
In some embodiments, the power transmitter of FIG. 3 may determine an indication of the minimum expected ESR. This may be based on the data received from the power receiver, e.g. indicating a minimum load of the power receiver to a nominal or reference power transmitter. The determiner 315 may compare the measured ESR to the minimum expected ESR and determine the maximum transmitter coil current based on this comparison. In many embodiments, the maximum transmitter coil current may be a monotonically decreasing function of a difference between the measured ESR and the minimum expected ESR.
For example, in many embodiments, the maximum transmitter coil current may be determined as:

$$I_{max} = \frac{P_{FOmax}}{\sqrt{ESR_{actual} - ESR_{expmin}}}$$

where $P_{FOmax}$ is maximum power dissipation allowed in any foreign object that may be present, $ESR_{actual}$ is the measured ESR of the transmitter coil 103, and $ESR_{expmin}$ expected minimum ESR of the transmitter coil 103.
This expression accounts for the different positions of the power receiver relative to the power transmitter and assumes that the values are accurate measures of the current conditions. Measurements uncertainty may for example be taken into account by using the following expression for the maximum transmitter coil current:

$$I_{max} = \frac{P_{FOmax}}{\sqrt{ESR_{actual} - ESR_{expmin} + ESR_{uncert}}}$$

where $ESR_{uncert}$ represents the uncertainty of the ESR measurements.

Such an approach may allow an efficient operation where power transfer can be adapted to reflect uncertainty in whether a foreign object is present or not. It may in many scenarios allow power transfer that would otherwise not be performed due to a risk of a foreign object being present. This may be achieved while simultaneously ensuring safe operation even if a foreign object is present.

The determination of the minimum expected ESR may be based on a position indication for the power receiver relative to the power transmitter. Thus, rather than considering the minimum possible ESR for all possible positions, a minimum possible ESR for the position may be estimated and used. As previously described, different parameters may be used as a position indication.

In some embodiments, the coupling factor K may be determined and used as an indication of a position of the power receiver relative to the power transmitter. The coupling factor may for example be used to estimate a maximum expected quality factor for the coupling factor.

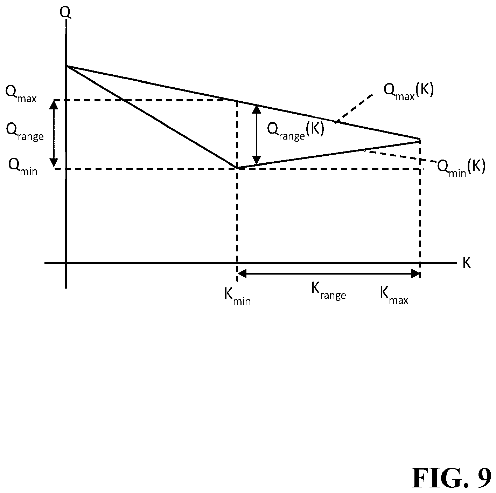

FIG. 9 illustrates an example of how the maximum Q-factor $Q_{max}$ and the minimum Q-factor $Q_{min}$ may vary as a function of the coupling factor. The relationship may for example be determined during a design or manufacturing phase by varying the position of the power receiver over an allowed space relative to a reference power transmitter, and measuring the coupling factor and Q factor for the different positions. Based on the measurements, the relationship of, in particular, the maximum Q-factor $Q_{max}$ may be determined. This relationship may be stored in the power receivers, e.g. as a function or as a look-up-table. When the power receiver initiates operation with a power transmitter, data may be transmitted from the power receiver to the power transmitter indicating how the maximum Q-factor $Q_{max}$ depends on the coupling factor K.

Once the K-factor has been measured, the maximum Q-factor $Q_{max}$ may be determined and the minimum expected ESR for this maximum Q-factor $Q_{max}$ may be determined.

For example, the power transmitter may measure the actual Q factor $Q_{actual}$, the coupling factor K, the resonance frequency $\omega_{res}$ and then proceed to calculate the maximum transmitter coil current from the following:

$$ESR_{expmin}(K) = \frac{\omega_{res} L}{Q_{expmax}(K)}$$

$$ESR_{actual} = \frac{1}{\omega_{res} Q_{actual} C}$$

$$I_{max} = \frac{P_{FOmax}}{\sqrt{ESR_{actual} - ESR_{expmin}(K)}}$$

where C is the capacitance of the output resonance circuit and L is the self-inductance of the transmitter coil 103.

When taking measurements uncertainty into account, the expression for the maximum transmitter coil current can be:

$$I_{max} = \frac{P_{FOmax}}{\sqrt{ESR_{actual} - ESR_{expmin}(K) + ESR_{uncert}}}$$

where $ESR_{uncert}$ represents the uncertainty of the ESR measurements.

In the power transmitter of FIG. 6, the function $ESR_{expmin}(K)$ may be determined based on the data received from the power receiver, and specifically may be provided by the power receiver.

In some embodiments, the minimum expected ESR may be determined to be dependent on the inductance of the transmitter coil 103. In such embodiments, the same approach may be used to characterize a power receiver as described above but with the measurements capturing the -inductance L and the equivalent series resistance. In this case, the power receiver may store a relationship between the ESR of the transmitter coil and the inductance of the transmitter coil $ESR_{min}(L)$ and communicate this to the power transmitter.

The information may be communicated to the power transmitter prior to the power transfer phase and used to determine the maximum transmitter coil current. Specifically, the power transmitter may determine the expected minimum ESR: $ESR_{expmin}(L)$ based on the received information from the power receiver, measure the resonance frequency $\omega_{res}$ and the actual ESR, $ESR_{actual}$. The maximum transmitter coil current may then be determined as follows:

$$ESR_{expmin}(L) = ESR_{expmin}\left(\frac{1}{\omega_{res}{}^2 C}\right)$$

$$ESR_{actual} = \frac{1}{\omega_{res} Q_{actual} C}$$

$$I_{max} = \frac{P_{FOmax}}{\sqrt{ESR_{actual} - ESR_{expmin}(L)}}$$

When taking measurements uncertainty into account, the expression for the maximum transmitter coil current may be:

$$I_{max} = \frac{P_{FOmax}}{\sqrt{ESR_{actual} - ESR_{expmin}(L) + ESR_{uncert}}}$$

where $ESR_{uncert}$ represents the uncertainty of the ESR measurements.

In some embodiments, the minimum expected equivalent series resistance may be frequency dependent, and particularly resonance frequency dependent. Thus, in some embodiments, the determiner 315 may measure the resonance frequency for the output resonance circuit and then determine the minimum expected equivalent series resistance as a function of this resonance frequency.

The frequency dependency of the equivalent series resistance, or particularly of the contribution to the equivalent series resistance for the power receiver can be pre-determined with a reference power transmitter by measuring the contribution of the power receiver to the equivalent series resistance of the power transmitter coil over a frequency range. This information can be stored (in the power receiver) and communicated (from the power receiver) to the power transmitter.

As described above, the power transmitter may include functionality for receiving data providing information on a reference minimum expected equivalent series resistance as a function of a position parameter from the power receiver. The reference minimum expected equivalent series resistance may be a minimum equivalent series resistance for a transmitter coil of a reference transmitter coupled to a power receiver coil of the power receiver for a given position parameter. The power receiver may transmit data indicating how the minimum expected ESR directly or indirectly depend on various parameters, such as the coupling facto K or the inductance L. The power transmitter may then proceed to determine the minimum expected ESR based on this data and the indicated reference minimum expected equivalent series resistance.

The information provided by the power receiver may for example include an indication of how the ESR (or a related parameter) depends on one or more of the following parameters that may be determined by the power transmitter:

- a Quality (Q) factor
- an ESR
- a coupling factor K
- a inductance L of the transmitter coil
- a resonance frequency of the output resonance circuit.

In some scenarios and embodiments, the power transmitter may be considered to be sufficiently similar to the reference power transmitter to allow the received data to be used directly. However, in other embodiments, the determiner 315 may be arranged to compensate for differences between the ESR of the reference transmitter and that of the actual power transmitter.

Thus, in some embodiments, the determiner 315 may be arranged to determine the minimum expected equivalent series resistance in response to a compensation of the reference minimum expected equivalent series resistance for a difference between a series resistance of the power transmitter coil relative to a reference series resistance of the transmitter coil of the reference transmitter.

For example, if the inductance of the power transmitter coil differs from the reference transmitter coil, the power transmitter can compensate for that difference. It may do so by first estimating a corresponding inductance value for the reference power transmitter $L_{ref\_PRx}$ from its actual measured $L_{PTx\_PRx}$, then by estimating the expected $ESR_{ref\_friendly\_min}(L_{ref\_PRx})$ for the reference transmitter coil by using the data received from the power receiver and finally by translating it to the equivalent series resistance for its inductance value $ESR_{PTx\_friendly\_min}(L_{PTx\_PRx})$ by considering the difference between its equivalent series resistance and that of the reference transmitter coil for a reference power receiver:

$$ESR_{PTx\_friendly\_min}\left(L_{PTx\_PRx}\right) = Translate\left(ESR_{ref\_friendly\_min}\left(L_{ref\_PRx}\right)\right)$$

with:

$$Translate = \frac{ESR_{friendly}\left(L_{LPx\_ref}\right)}{ESR_{friendly}\left(L_{ref\_ref}\right)},$$

where $ESR_{friendly}(L_{LPx\_ref})$ is the contribution of reference power receiver to the equivalent series resistance of the transmitter coil of the power transmitter, and
$ESR_{friendly}(L_{ref\_ref})$ is the contribution of reference power receiver to the equivalent series resistance of the reference transmitter coil.

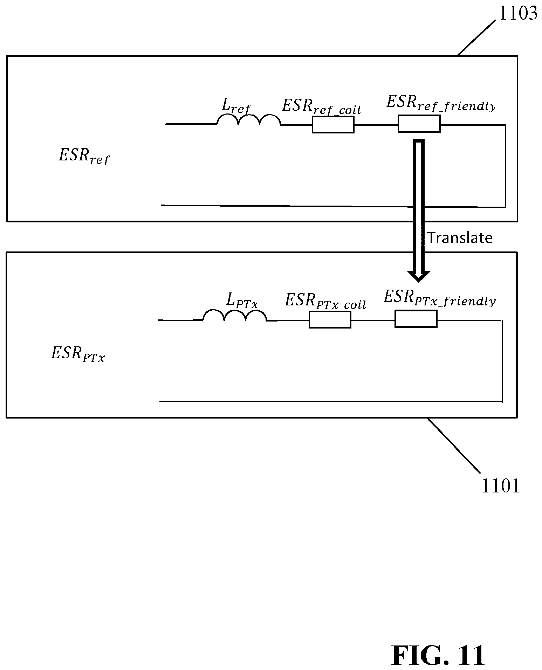

FIG. 11 illustrates an equivalent electric circuit for the power transmitter 1101 and an equivalent electric circuit for a reference power transmitter 1103. In this figure $ESR_{ref\_friendly}$ represents the contribution of the power receiver to the equivalent series resistance of the reference transmitter coil and $ESR_{PTx\_friendly}$ represents the contribution of the power receiver to the equivalent series resistance of the power transmitter coil. The arrow between $ESR_{ref\_friendly}$ and $ESR_{PTx\_friendly}$ indicates the translation for the power receiver's contribution to the equivalent series resistance of the transmitter coils.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

**Claims**

1. A power transmitter (101) for wirelessly providing power to a power receiver (105) via an electromagnetic signal; the power transmitter (101) comprising:

    an output resonance circuit comprising a transmitter coil (103) and at least one capacitor (303) forming a resonance circuit;
    a driver (301) arranged to generate a drive signal for the output resonance circuit (103, 303) to generate the electromagnetic signal;
    a measurer (313) arranged to measure a loading parameter, the loading parameter being indicative of a loading of the transmitter coil (103) during a time interval where power transfer is inactive;
    a position determiner (317) arranged to determine a position parameter indicative of a position of the power receiver relative to the transmitter coil (103);
    a reference determiner (319) arranged to determine a reference loading for the power receiver (105) as a function of at least the position parameter, the reference loading being indicative of an estimated loading of the electromagnetic signal by the power receiver (105);
    a receiver (307) arranged to receive data from the power receiver (105), the data comprising an indication of a relationship between the position parameter and the reference loading for the power receiver (105);
    an adapter (321) for adapting the function in response to the indication of the relationship between the position parameter and the reference loading;
    a level determiner (315) arranged to determine a maximum electromagnetic signal level for the electromagnetic signal during power transfer in response to the loading parameter in comparison to the reference loading; and

    wherein the driver (301) is arranged to constrain the drive signal such that the electromagnetic signal does not exceed the maximum electromagnetic signal level during power transfer.

2. The power transfer system of claim 1 wherein the position parameter includes a coupling parameter indicative of a coupling between the transmitter coil (103) and the power receiver (105).

3. The power transfer system of any previous claim wherein the position parameter includes a coupling factor for the power transmitter coil (103) and the power receiver coil (105).

4. The power transfer system of any previous claim wherein the position parameter includes an inductance value of the transmitter coil (103).

5. The power transfer system of any previous claim wherein the position parameter includes a resonance frequency of the resonance circuit.

6. The power transfer system of any previous claim wherein the loading parameter includes an equivalent series resistance for the transmitter coil (103).

7. The power transfer system of claim 6 wherein the relationship is indicative of an equivalent series resistance for a range of different positions of the power receiver (105) relative to a position of a reference transmitter coil.

8. The power transfer system of any previous claim wherein the loading parameter includes a quality factor for the transmitter coil (103).

9. The power transfer system of claim 8 wherein the relationship is indicative of a quality factor for the resonance circuit for a range of different positions of the power receiver (105) relative to a position of a reference transmitter.

10. The power transfer system of any previous claim wherein the relationship is a linear function relating a value of the position parameter to a value of the reference loading; and the data comprises at least one of an indication of a gradient of the linear function and an offset of the linear function.

11. The power transfer system of any previous claim wherein the data comprises at least two sets of related values for the loading parameter and the position parameter, and the adapter (321) is arranged to determine the function to match the sets of related values.

12. The power transfer system of any previous claim wherein the function is further dependent on a frequency of the drive signal; the data further comprises an indication of a relationship between a frequency of the power transfer signal and the reference loading; and the adapter (321) is arranged to adapt the function in response to the indication of the relationship between the frequency of the power transfer signal and the reference loading.

13. A power receiver (101) for wirelessly receiving power from a power transmitter (105) via an electromagnetic signal, the power receiver (101) comprising:

   an inductive power extraction element (107) arranged to extract power from the electromagnetic signal during power transfer time intervals of a power transfer phase;
   a communicator (609) arranged to transmit data to the power transmitter;
   a communication controller (601) arranged to control the communicator (609) to transmit at least one message to the power transmitter (101) prior to the power control phase; the at least one message comprising data indicative of a relationship between a position parameter and a reference loading for the power receiver (105), the reference loading being an estimated loading of the electromagnetic signal for a reference power transmitter and the position parameter being indicative of a position of the power receiver relative to a transmitter coil of the reference power transmitter (101).

14. A wireless power transfer system comprising the power transmitter of claim 1 and the power receiver of claim 13.

15. A method of operation for power transmitter (101) wirelessly providing power to a power receiver (105) via an electromagnetic signal, the power transmitter (101) comprising:
   an output resonance circuit comprising a transmitter coil (103) and at least one capacitor (303) forming a resonance circuit;
   and the method comprising:

   generating a drive signal for the output resonance circuit (103) to generate the electromagnetic signal;
   measuring a loading parameter, the loading parameter being indicative of a loading of the transmitter coil (103) during a time interval where power transfer is inactive;
   determining a position parameter indicative of a position of the power receiver (105) relative to the transmitter coil (103);
   determining a reference loading for the power receiver (105) as a function of at least the position parameter, the reference loading being indicative of an estimated loading of the electromagnetic signal by the power receiver (105);
   receiving data from the power receiver (105), the data comprising an indication of a relationship between the position parameter and the reference loading for the power receiver (105);
   adapting the function in response to the indication of the relationship between the position parameter and the reference loading;
   determining a maximum electromagnetic signal level for the electromagnetic signal during power transfer in response to the loading parameter in comparison to the reference loading; and
   constraining the drive signal such that the electromagnetic signal does not exceed the maximum electromagnetic signal level during power transfer.

16. A method of operation for a power receiver (101) wirelessly receiving power from a power transmitter (105) via an electromagnetic signal, the power receiver (101) comprising:

   extracting power from the electromagnetic signal during power transfer time intervals of a power transfer phase; and

transmitting a message to the power transmitter (101) prior to the power control phase; the message comprising data indicative of a relationship between a position parameter and a reference loading for the power receiver (105), the reference loading being an estimated loading of the electromagnetic signal for a reference power transmitter and the position parameter being indicative of a position of the power receiver (105) relative to a transmitter coil (103) of the reference power transmitter (101).

17. A method of operation for a wireless power transfer system comprising a power transmitter (101) performing the method of claim 15 and a power receiver (105) performing the method claim 16.

101

103

PTX

105

107

PRX

**FIG. 1**

FIG. 2

FIG. 3

FIG. 4

FIG. 5

**FIG. 6**

**FIG. 7**

701

$D_{off} = -max$

107

105

FM

$D_z = max$

103

101

**FIG. 8**

**FIG. 9**

**FIG. 10**

**FIG. 11**

Europäisches
Patentamt

European
Patent Office

Office européen
des brevets

# EUROPEAN SEARCH REPORT

Application Number

**EP 23 16 1046**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 591 805 A1 (KONINKLIJKE PHILIPS NV [NL]) 8 January 2020 (2020-01-08) * abstract; figures * * paragraphs [0050] – [0148] * ----- | 1-17 | INV. H02J50/12 H02J50/80 H02J50/90 H04B5/00 |
| X | EP 4 016 800 A1 (KONINKLIJKE PHILIPS NV [NL]) 22 June 2022 (2022-06-22) | 15 | |
| A | * abstract; figures 1, 2 * * paragraphs [0161] – [0164] * ----- | 1-14,16, 17 | |
| X,D | WO 2015/018868 A1 (KONINKL PHILIPS NV [NL]) 12 February 2015 (2015-02-12) * abstract; figures 1, 5 * * page 16, line 6 – line 28 * ----- | 15 | |

| | |
|---|---|
| | TECHNICAL FIELDS SEARCHED (IPC) |
| | H02J |

The present search report has been drawn up for all claims

| Place of search | Date of completion of the search | Examiner |
|---|---|---|
| Munich | 24 August 2023 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 1046

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2023

| Patent document cited in search report | | Publication date | Patent family member(s) | | Publication date |
|---|---|---|---|---|---|
| EP 3591805 | A1 | 08-01-2020 | CN | 112449737 A | 05-03-2021 |
| | | | EP | 3591805 A1 | 08-01-2020 |
| | | | EP | 3818621 A1 | 12-05-2021 |
| | | | US | 2021265876 A1 | 26-08-2021 |
| | | | WO | 2020007640 A1 | 09-01-2020 |
| EP 4016800 | A1 | 22-06-2022 | EP | 4016800 A1 | 22-06-2022 |
| | | | TW | 202245377 A | 16-11-2022 |
| | | | WO | 2022128762 A1 | 23-06-2022 |
| WO 2015018868 | A1 | 12-02-2015 | BR | 112014029281 A2 | 27-06-2017 |
| | | | CN | 104584448 A | 29-04-2015 |
| | | | EP | 2875586 A1 | 27-05-2015 |
| | | | ES | 2664407 T3 | 19-04-2018 |
| | | | JP | 5872745 B2 | 01-03-2016 |
| | | | JP | 2015536633 A | 21-12-2015 |
| | | | MX | 346430 B | 21-03-2017 |
| | | | PL | 2875586 T3 | 29-06-2018 |
| | | | RU | 2015107465 A | 27-09-2016 |
| | | | US | 2016181818 A1 | 23-06-2016 |
| | | | WO | 2015018868 A1 | 12-02-2015 |
| | | | ZA | 201408382 B | 28-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015018868 A1

- WO 2012127335 A